# EUROPEAN PATENT APPLICATION

(11) **EP 1 507 219 A2**
(43) Date of publication of application: **16.02.2005**
(21) Application number: 04018369.1
(22) Date of filing: 03.08.2004
(51) Int. Cl.: G06F 17/30

(54) **Computer system and program for improved file system performance**

(30) Priority: 12.08.2003 JP 2003292273
(71) Applicant: Kabushiki Kaisha Toshiba, Tokyo 105-8001 (JP)
(72) Inventor: Tomita, Haruo, 1-chome, Minato-ku, Tokyo 105-8001 (JP)
(74) Representative: Henkel, Feiler & Hänzel

(57) **Abstract**

For file access upon file reference (read request) without any file content update (data update) process, a write process for writing an i node of that file on a disk device (30) is not executed (no write request is generated), and "i node latest access time" is updated on a kernel space (11) to manage the i node.

## Description

The present invention relates to a computer system and program, which are suitably applied to, for example, a journal file system, storage area network, input/output controller, and the like.

In a computer system that manages files on a secondary storage (disk device), various proposals that efficiently manage files while maintaining high reliability have been made (e.g., Jpn. Pat. Appln. KOKAI Publication No. 2000-353115). In such computer system, file access and update processes require write process of the data structure and data in the secondary storage that saves and manages files. Since an application such as a database or the like manages an access time, every time the access time is updated, write requests are generated for data, journal data, the data structure on the disk device, and the like. Especially, in a journal file system that requires a journal data write process, every time an access time update request of a file is received from an application program, a process for updating information of the access time allocated on a kernel memory for the data structure (i node) on the disk device that saves files, and writing that information in the disk device together with journal data is executed (e.g., "The Episode File Systems" by S. Chutani et al., Proceedings of the USENIX Winter 1992 Technical Conference, pp. 43 - 60, Jun 1992). Therefore, in a system on which an application program that frequently updates the access time of a file runs, write requests other than those upon execution of the update processes of journal data and user data are frequently generated, resulting in deterioration of the system performance.

As described above, a write process to the secondary storage is required even for file access on the secondary storage (disk device) without any content update process of a file (data), thus influencing the system performance.

It is an object of the present invention to provide a computer system and program, which can improve the processing performance by removing a write process to a secondary storage without any content update process of a file to be accessed.

The present invention is characterized in that a write process of a file access time update request from an application program is implemented by cashing the request on a kernel memory without modifying an application program, and the data structure on the disk device, whose access time is requested to be updated, is delay-written at a flash interval of journal data, thus skipping execution of an unnecessary write request, and improving the performance of the computer system.

The processing performance can be improved by removing a write process to a secondary storage without any content update process of a file to be accessed.

In a journal file system, upon delay-writing a write request to the disk device by a file access time update process to be executed in response to a file access from an application program, no inconsistency occurs in meta data, data, and the like managed by the journal file system, and the change request of the file access time of a file can be delay-written. Furthermore, since the interface between the application program and journal file system is not changed at all, the need for a change in application program can be obviated.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing the arrangement of principal part of a computer system according to an embodiment of the present invention;
FIG. 2 is a block diagram showing the software configuration of the computer system according to the embodiment of the present invention;
FIG. 3 shows an example of a data structure used in the computer system according to the embodiment of the present invention;
FIG. 4 is a flowchart showing an i node management processing sequence on a delay write list, which is executed by a journal file system according to the embodiment of the present invention;
FIG. 5 shows an example of status transition of the latest access time of an i node, which is managed on the delay write list according to the embodiment of the present invention;
FIG. 6 is a flowchart showing an i node write processing sequence of the journal file system upon file access that requires to update a file according to the embodiment of the present invention; and
FIG. 7 is a flowchart showing the sequence of a commit process according to the embodiment of the present invention.

A preferred embodiment of the present invention will now be described with reference to the accompanying drawings. This embodiment will exemplify a journal file system. However, the present invention is not limited to the journal file system, and can be practiced in various computer systems which have a data structure management function upon file access such as a storage area network, input/output controller, and the like.

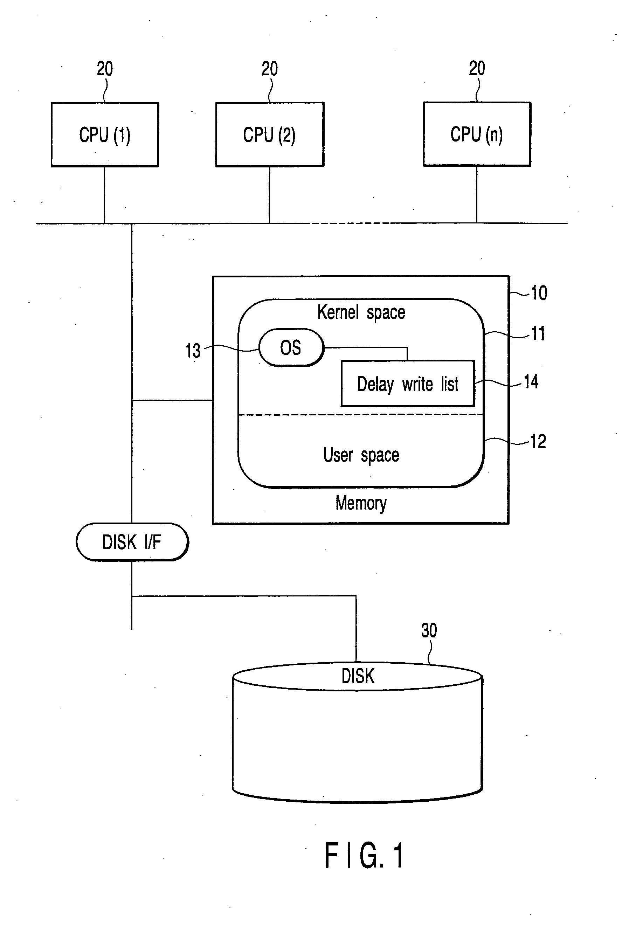

FIG. 1 shows the arrangement of principal part of a computer system according to an embodiment of the present invention. The computer system comprises a memory 10 serving as a main storage, a disk device (DISK) 30 serving as a secondary storage, CPUs 20 which make file access to the disk device 30, and the like.

An operating system (OS) 13 resides on a kernel space 11 on the memory 10. A delay write list 14 used to temporarily save and manage attribute information (to be referred to as an i node hereinafter) of a file of interest upon file access is assured on a predetermined area under the management of the OS 13. An application program, processing data, and the like are stored in a user space 12 on the memory 10.

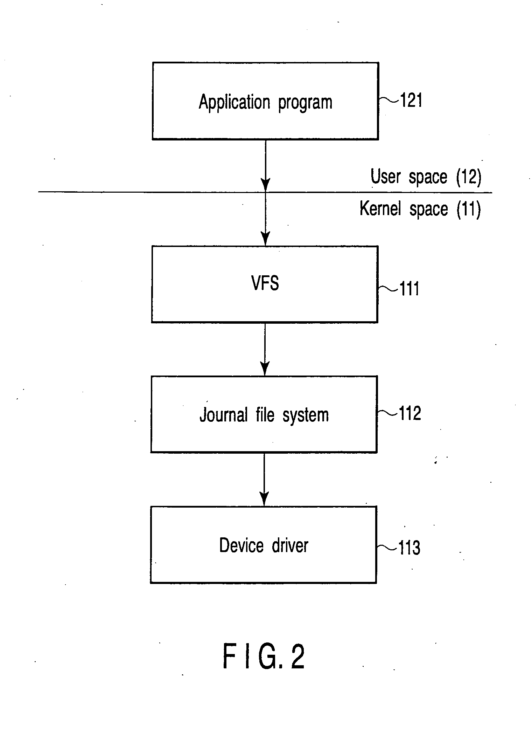

FIG. 2 shows the software configuration of the computer system shown in FIG. 1.

The user space 12 on the memory 10 stores an application program 121 which makes file access to the disk device 30. The kernel space 11 on the memory 10 stores a virtual file system (VFS) 111, journal file system 112, device driver 113, and the like under the management of the OS 13.

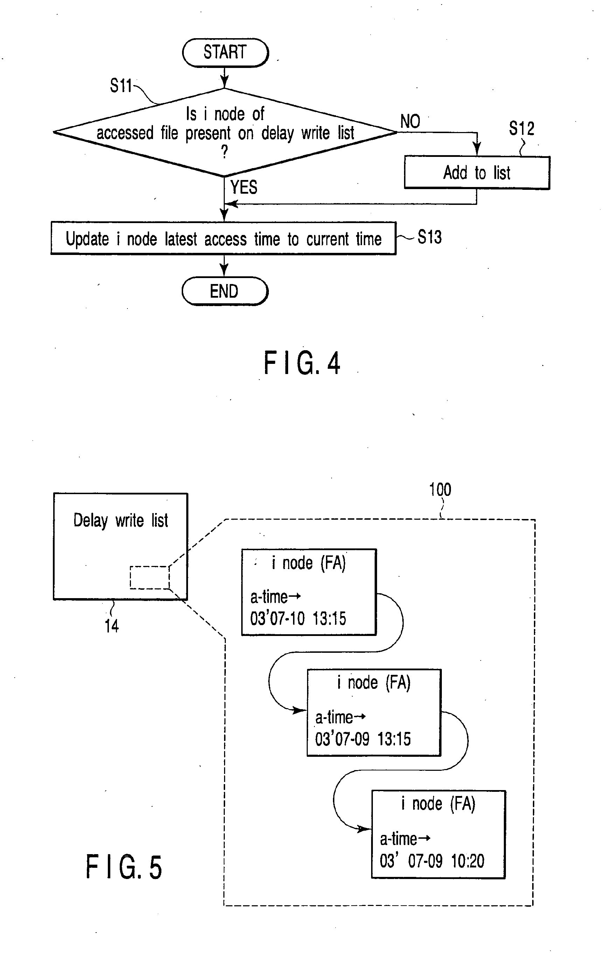

The VFS 111 accepts an input/output request from the application program 121, recognizes the requested file type, and calls a file system according to the recognized file type. The journal file system 112 manages access history upon file access (read/write) in accordance with requests from the application program 121, which are input via the VFS 111. In this embodiment, the data structure (i node) shown in FIGS. 4 to 7 is managed using the delay write list 14 assured on the kernel space 11 on the memory 10. The device driver 113 writes an i node on the disk device 30 in accordance with an instruction from the journal file system 112.

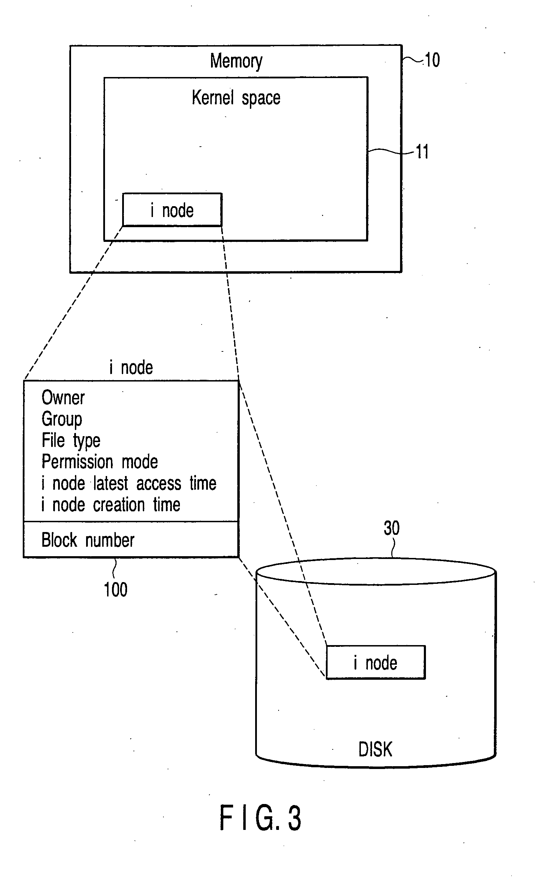

FIG. 3 shows an example of the data structure to be managed on the disk device 30. FIG. 3 shows an i node 100 which has fields such as "owner", "group name", "file type", permission mode", "i node latest access time", "i node creation time", "block number", and the like. If a request from the application program 121 is a file reference (read request) without any content update process (data update process) of a file, the contents of the "i node latest access time" field of this i node 100 are updated to the current time, and the i node is managed on the delay write list 14 on the kernel space 11. In case of a file access that requires to update a file (update data), the i node of the file of interest is extracted from the delay write list 14 on the kernel space 11, and the contents of its "i node latest access time" field are updated to the current time. After that, the i node is written (written back) in the disk device 30. The i node update and write processes in this case will be described later with reference to FIGS. 4 to 7.

FIG. 4 shows the i node management processing sequence on the delay write list 14, which is executed by the journal file system 112, and FIG. 5 shows an example of status transition of the latest access time of the i node 100 managed on the delay write list 14. FIG. 5 shows an example of status transition of the latest access time (a-time) of the i node 100 of a file (FA) on the disk device 30.

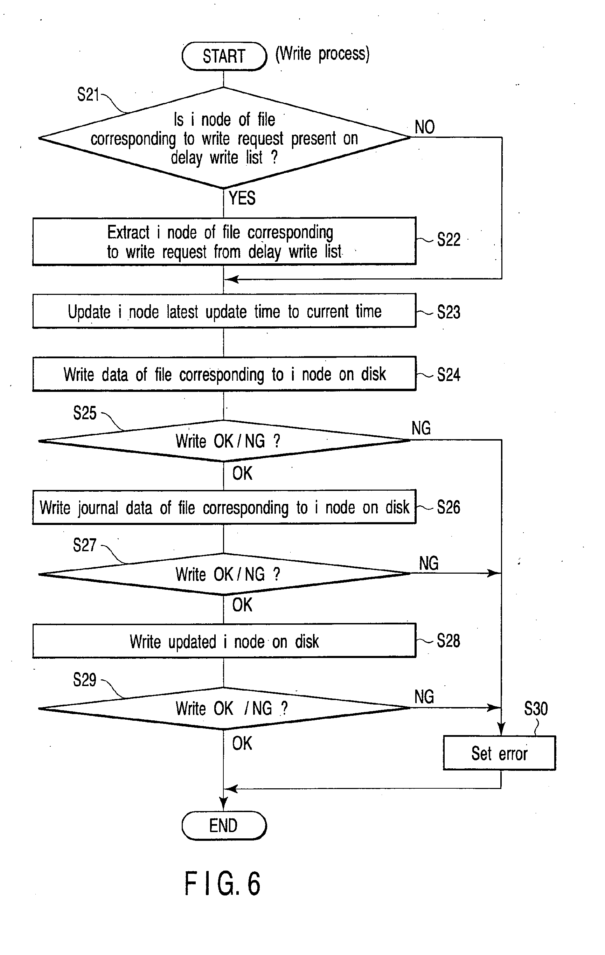

FIG. 6 shows the i node write processing sequence of the journal file system 112 upon file access that requires to update a file (update data). In this case, the i node write process on the disk device 30 is executed in the sequence shown in FIG. 6 in response to a write request from the application program 121.

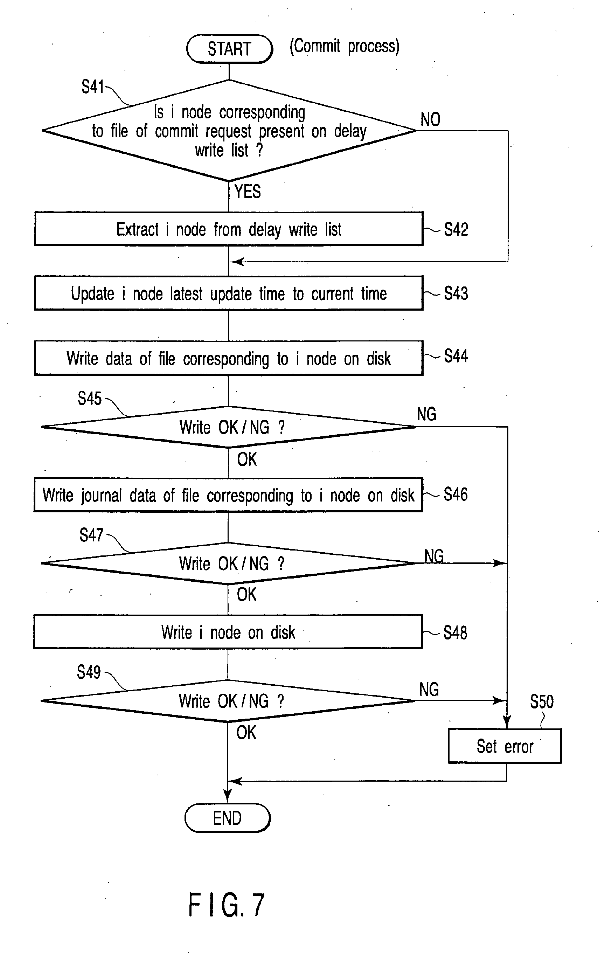

FIG. 7 shows the sequence of a journal data commit process executed at predetermined time intervals.

The i node update and write processes in the journal file system 112 will be described below with reference to these drawings.

Upon file access on the disk device 30 according to a request from the application program 121, the journal file system 112 checks if an i node of the file of interest is present (already written) on the delay write list 14 (step S11 in FIG. 4).

If no i node of the file to be accessed is present (written) on the delay write list 14 (NO in step S11 in FIG. 4), an i node of the file of interest is added to the delay write list 14 (step S12 in FIG. 4).

Next, the contents of the "i node latest access time" field of the i node of the file to be accessed, which is already written in the delay write list 14 (YES in step S11 in FIG. 4) or is newly added (step S12 in FIG. 4), are updated (changed) to the current time indicated by RTC (step S13 in FIG. 4).

As described above, for file access upon file reference (read request) without any file content update (data update) process, no process for writing the i node of that file on the disk device 30 is executed (no write request is generated), and "i node latest access time" is updated on the kernel space 11 to manage the i node. FIG. 5 shows an example of update status transition of the latest access time (a-time) of the i node 100 on the kernel space 11 (delay write list 14) upon file access in this case.

In this manner, for file access upon file reference without any file content update process, no write-back process that requires to update the i node on the disk device 30 is executed, thus reducing the processing load on the system. That is, since no write request to the disk device 30 is generated upon updating the i node access time, the system performance can be improved.

The i node write process in response to a write request from the application program 121 will be described below with reference to FIG. 6.

Upon file access on the disk device 30 according to a write request from the application program 121, the journal file system 112 checks if an i node of a file as a target of the write request is present (already written) in the delay write list 14 (step S21 in FIG. 6).

If the i node of the file as the target of the write request is present on the delay write list 14, that i node is extracted from the delay write list 14 (step S22 in FIG. 6), and the contents of its "i node latest access time" field are updated (changed) to the current time (step S23 in FIG. 6).

Upon writing a new file, rewriting a file, and so forth, since no i node of the file as the target of write request is not present on the delay write list 14 (NO in step S21 in FIG. 6), an i node of the file of interest is generated for a new file to be written, or the i node corresponding to the file to be rewritten is read out from the disk device 30, and the contents of the "i node latest access time" field of that i node are updated (changed) to the current time (step S23 in FIG. 6).

Next, data (user data) of the file corresponding to the i node is written on the disk device 30 (step S24 in FIG. 6). After it is confirmed that the write process is normally made (OK in step S25 in FIG. 6), journal data of the file corresponding to the i node is written on the disk device 30 (step S26 in FIG. 6). Furthermore, after it is confirmed that the write process of the journal data is normally made (OK in step S25 in FIG. 6), the updated i node is written on the disk device 30 (step S28 in FIG. 6). If a write error has occurred in each of the write processes of the user data, journal data, and i node (NG in step S25, S27, or S29 in FIG. 6), a predetermined error process is executed (step S30 in FIG. 6).

The i node write process in response to a commit request generated at predetermined periods will be described below with reference to FIG. 7.

Upon file access on the disk device 30 in accordance with the commit request, the journal file system 112 checks if an i node corresponding to a file of the commit request is present on the delay write list 14 (step S41 in FIG. 7). If the i node is present on the delay write list 14, that i node is extracted from the delay write list 14 (step S42 in FIG. 7), and the contents of its "i node latest access time" field are updated to the current time (step S43 in FIG. 7). If no i node of that file is present on the delay write list 14, the i node of the file of interest is read out from the disk device 30 (step S42 in FIG. 7), and the contents of its "i node latest access time" field are updated to the current time (step S43 in FIG. 7).

Next, data of the file corresponding to the i node is written on the disk device 30 (step S44 in FIG. 7). After it is confirmed that the write process is normally made (OK in step S45 in FIG. 7), journal data of the file corresponding to the i node is written on the disk device 30 (step S46 in FIG. 7). Furthermore, after it is confirmed that the write process of the journal data is normally made (OK in step S47 in FIG. 7), the updated i node is written on the disk device 30 (step S48 in FIG. 7). If a write error has occurred in each of the write processes of the user data, journal data, and i node (NG in step S45, S47, or S49 in FIG. 7), a predetermined error process is executed (step S50 in FIG. 7).

In the above embodiment, the field update and write processes of the data structure (i node) have been explained taking the journal file system as an example. However, the present invention is not limited to the journal file system, and can be applied to various computer systems which have a data structure management function upon file access such as a storage area network, input/output controller, and the like.

## Claims

1. A computer system **characterized by** comprising:
a main storage device (12) for storing attribute information of data of a file;
a secondary storage device (30) for storing the data of the file;
attribute information management means (20) for managing attribute information corresponding to the data of the file in response to a reference to the file on the secondary storage device; and
attribute information update means (20) for updating the attribute information stored in the main storage device in response to the reference to the file.

2. A system according to claim 1, **characterized in that** the attribute information management means manages the attribute information of the file on the secondary storage device on a specific area assured on a kernel space on the main storage device.

3. A system according to claim 2, **characterized in that** the attribute information update means reads out and updates the attribute information corresponding' to a file every time a file reference on the secondary storage device is generated.

4. A system according to claim 2, **characterized in that** the attribute information update means acquires attribute information corresponding to a file from the specific area and updates a latest update time included in the acquired attribute information to a current time every time a file reference on the secondary storage device is generated.

5. A system according to claim 2, **characterized in that** the attribute information update means comprises:
means for checking in response to a reference to a file on the secondary storage device if attribute information corresponding to that file is present on the specific area assured on the kernel space;
means for, when it is determined that the attribute information is present on the specific area assured on the kernel space, acquiring the attribute information of the file from the specific area, and updating a latest access time of the acquired attribute information to a current time; and
means for, when it is determined that the attribute information is not present on the specific area assured on the kernel space, writing attribute information of that file on the specific area, and updating a latest access time of that attribute information to a current time.

6. A system according to claim 2, **characterized in that** the attribute information management means comprises:
means for setting a delay write list, used to delay-write the attribute information, on the kernel space, and
means for managing the attribute information on the set delay write list; and
the attribute information update means comprises:
processing means for checking if attribute information of a file according to a file read request from an application program is present on the delay write list, and
processing means for, when the attribute information is present on the delay write list, updating a latest access time of the attribute information on the delay write list, and for, when the attribute information is not present on the delay write list, adding attribute information of the file according to the file read request to the delay write list, and updating a latest access time of the attribute information to a current time.

7. A system according to claim 1, **characterized in that** the attribute information update means executes an update process upon reference to a file on the secondary storage device upon generation of a file read request to the secondary storage device, and
the attribute information update means executes a process for writing the updated attribute information on the secondary storage device upon generation of a file write request to the secondary storage device.

8. A system according to claim 1, **characterized by** further comprising attribute information write process means for updating the attribute information corresponding to a file in response to file access that updates data of the file on the secondary storage device, and writing the updated attribute information on the secondary storage device together with the updated data.
